**Europäisches Patentamt**

**European Patent Office**

**Office européen des brevets**

(19)

(11) Veröffentlichungsnummer : **0 352 595 B1**

(12)

# EUROPÄISCHE PATENTSCHRIFT

(45) Veröffentlichungstag der Patentschrift :
15.04.92 Patentblatt 92/16

(51) Int. Cl.$^5$ : **G01L 3/10**

(21) Anmeldenummer : **89113092.4**

(22) Anmeldetag : **17.07.89**

(54) **Drehmomentmessvorrichtung.**

(30) Priorität : **28.07.88 DE 3825706**

(43) Veröffentlichungstag der Anmeldung :
**31.01.90 Patentblatt 90/05**

(45) Bekanntmachung des Hinweises auf die
Patenterteilung :
**15.04.92 Patentblatt 92/16**

(84) Benannte Vertragsstaaten :
**BE CH DE ES FR IT LI SE**

(56) Entgegenhaltungen :
**CH-A- 463 145**
**DE-A- 3 212 946**

(73) Patentinhaber : **SIEMENS
AKTIENGESELLSCHAFT
Wittelsbacherplatz 2
W-8000 München 2 (DE)**

(72) Erfinder : **Dombrowski, Kurt, Dipl.-Ing.
Leitensteig 28
W-8520 Erlangen (DE)**
Erfinder : **Hilbig, Wolfgang, Dipl.-Ing.
Ackerstrasse 10
W-8438 Berg (DE)**
Erfinder : **Gebauer, Wolfgang, Dipl.-Ing.
Lachnerstrasse 69
W-8520 Erlangen (DE)**

EP 0 352 595 B1

## Beschreibung

Die Erfindung bezieht sich auf eine Drehmomentmeßwelle mit einer ersten Wellennabe und einer zweiten Wellennabe, wobei die erste Wellennabe und die zweite Wellennabe mechanisch miteinander gekoppelt sind, und wobei beide Wellennaben radial gegeneinander gelagert sind. Eine solche Anordnung ist aus dem Dokument CH-A-463 145 bekannt. Hier sind zwei konzentrisch zueinander angeordnete, als Kraftübertragungsorgane ausgebildete Nabenelemente vorgesehen, deren eine Ende starr miteinander verbunden und deren gegenüberliegende Enden gegeneinander verdrehbar gelagert sind. Auf den Nabenelementen sind elektrische, auf Formänderungen ansprechende Drehmomentmeßorgane vorgesehen.

Aus dem Dokument DE-A-32 12 946 ist ein rohrförmiges Drehmomentmeßsystem bekannt, bei dem das Rohr in Stege mit Dehnungsmeßstreifen aufgeteilt ist. Hierdurch erhält man ein wesentlich niedrigeres Widerstandmoment als bei einem Vollrohr.

Zur Drehmomentistwerterfassung bei Prüfständen sind drei Verfahren bekannt. Das eine Verfahren beruht darauf, die Belastungsmaschine pendelnd aufzuhängen und das Reaktionsmoment zu messen. Die zweite Methode besteht bei elektrischen Mashinen darin, das Drehmoment aus relativ leicht erfaßbaren elektrischen Größen und mechanischen Korrekturgrößen zu berechnen. Die dritte, sehr häufig verwendete Methode ist die eingangs genannte Drehmomentmeßwelle, die im Antriebsstrang, also an der Stelle, an der der Drehmomentistwert echt vorhanden ist, eingebaut wird. Wegen der hohen Drehzahl auf Prüfständen können im allgemeinen diese Meßwellen nicht fliegend im Wellenstrang eingebaut werden und müssen daher in eingenen Stehlagern nochmals gelagert werden.

Vor- und Nachteile der einzelnen Meßverfahren sind im einzelnen näher, z.B. in der Siemens-Zeitschrift 1971, Heft 10, Seite 720, beschrieben. Das letztgeschilderte Verfahren mit der Meßwelle hat insbesondere den Nachteil einer Vergrößerung der Baulänge der Anordnung und kann auch gelegentlich hinsichtlich der Drehschwingungsgefahr zu Problemen führen.

Die Aufgabe der vorliegenden Erfindung besteht darin, eine Drehmomentmeßwelle der eingangs genannten Art so auszubilden, daß bei relativ kurzer Baulänge ausreichend genaue Meßwerte geliefert werden.

Diese Aufgabe wird erfindungsgemäß dadurch gelöst, daß die erste Wellennabe und die zweite Wellennabe der genannten Drehmomentmeßwelle über Meßstege mit Dehnungsstreifen mechanisch miteinander gekoppelt sind.

Durch die hierdurch mögliche quasi koaxiale Lagerung der beiden Naben gegeneinander und durch die vorteilhafterweise am Nabenumfang angebrachten Meßstege lassen sich verhältnismäßig kurze Baulänge und ausreichende Meßgenauigkeit miteinander vereinen. Die Meßstege, die als beidseitig eingespannte Biegeträger ausgebildet sind, werden durch das übertragene Drehmoment dabei s-förmig elastisch verbogen.

Anhand eines in der Zeichnung dargestellten Ausführungsbeispiels sei die Erfindung näher erläutert; es zeigen:

FIG 1 das Prinzipschaltbild eines Prüfstandes und

FIG 2 den näheren mechanischen Aufbau der Drehmomentmeßvorrichtung.

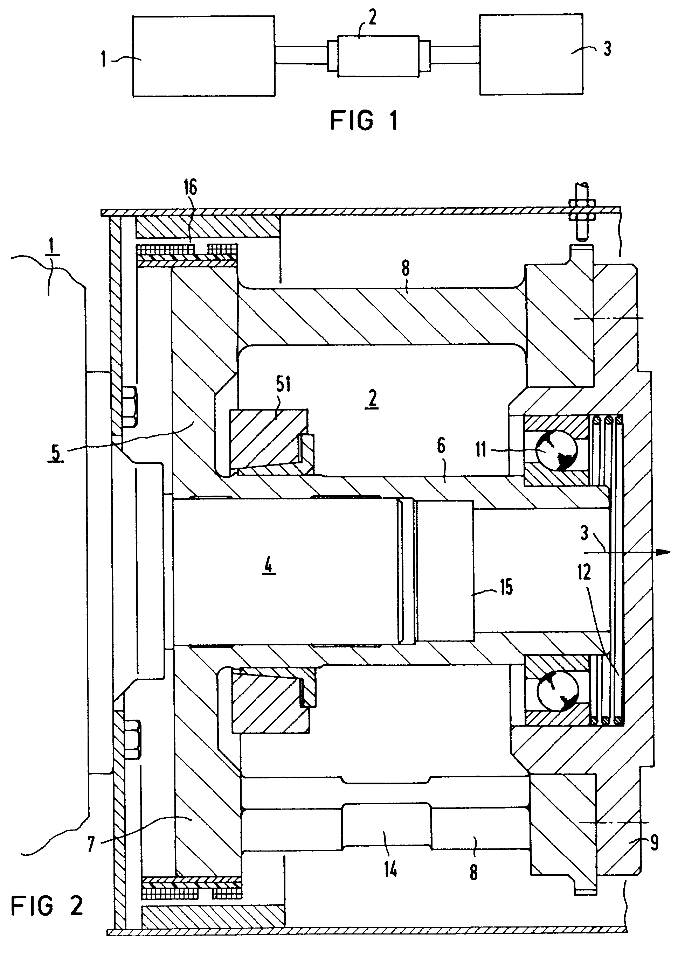

Wie aus FIG 1 ersichtlich, ist eine elektrische Maschine 1 über eine Drehmomentmeßvorrichtung 2 mit dem Prüfling 3, z.B. einem Verbrennungsmotor gekuppelt. Je nach geforderten Betriebsbedingungen kann dabei die elektrische Maschine 1 als Antriebsmotor oder Bremsgenerator wirken.

Wie aus FIG 2 ersichtlich, ist auf dem Wellenstumpf 4 der elektrischen Prüfmaschine 1 eine Nabe 5 mittels einer Schrumpfscheibe 51 befestigt. Die Nabe 5 besteht aus einem scheibenförmigen Teil 7 von etwa vierfachem Wellendurchmesser und einer rohrförmigen Auskragung 6, die den Wellenstumpf überdeckt. Die Nabe 5 ist am äußeren Umfang über parallel zur Welle 4 liegende Meßstege 8 mit einer zweiten Nabe 9 verbunden, die mit dem Prüfling 3 mechanisch zu kuppeln ist. Die Zahl der Meßstege wird sich nach den Gegebenheiten richten, im Regelfall dürften drei bis fünf am Umfang verteilte Meßstege ausreichen.

Auf jedem Meßsteg sind an besonders geschwächten Stellen Drehmomentmeßstreifen 14 aufgebracht, durch die die Biegung in diesen Meßstegen und damit das übertragene Drehmoment erfaßt werden kann. Die hierfür erforderliche Auswerteelektronik 15 ist ebenfalls im rohrförmigen Teil 6 der Nabe 5 untergebracht. Die so gewonnenen Meßsignale werden dann schleifringlos über eine Transformatorenkombination 16 nach außen übertragen.

Wie ebenfalls aus der Figur ersichtlich, ist die zweite Nabe 9 mittels Schrägkugellager 11 radial gegenüber der Nabe 5 gelagert. Diese Lager stehen dabei noch unter Federvorspannung 12, so daß auch eine gewisse Axialbewegung möglich ist.

**Patentansprüche**

1. Drehmomentmeßwelle mit einer ersten Wellennabe (5) und einer zweiten Wellennabe (9), wobei die erste Wellennabe (5) und die zweite Wellennabe (9) mechanisch miteinander gekoppelt sind, und wobei beide Wellennaben (5, 9) radial gegeneinander gelagert sind, **dadurch gekennzeichnet**, daß die erste Wellennabe (5) und die zweite Wellennabe (9) über Meßstege (8,) mit Dehnungsmeßstreifen (14) mechanisch miteinander gekoppelt sind.

2. Drehmomentmeßwelle nach Anspruch 1, **dadurch gekennzeichnet**, daß die Wellennabe (5) als scheibenförmiges Teil (7) mit einer rohrförmigen Auskragung (6) in Axialrichtung der Meßwelle ausgebildet ist und daß die zweite Wellennabe (9) radial auf der Auskragung (6) der ersten Wellennabe (5) gelagert ist.

3. Drehmomentmeßwelle nach Anspruch 1 und 2, **dadurch gekennzeichnet**, daß die Meßstege (8,) gleichmäßig über den Außenumfang des scheibenförmigen Teils (7) der ersten Wellennabe (5) verteilt sind.

**Claims**

1. Torque-measuring shaft having a first shaft hub (5) and a second shaft hub (9), with the first shaft hub (5) and the second shaft hub (9) being mechanically coupled together and with both shaft hubs (5, 9) being mounted radially against one another, characterised in that the first shaft hub (5) and the second shaft hub (9) are mechanically coupled together by way of measurement bars (8) with strain gauges (14).

2. Torque-measuring shaft according to claim 1, characterised in that the shaft hub (5) is formed as a disc-shaped portion (7) with a tubular projection (6) in the axial direction of the measuring shaft and in that the second shaft hub (9) is mounted radially on the projection (6) of the first shaft hub (5).

3. Torque-measuring shaft according to claim 1 and 2, characterised in that the measurement bars (8) are evenly distributed over the outer periphery of the disc-shaped portion (7) of the first shaft hub (5).

**Revendications**

1. Arbre de mesure d'un couple comportant un premier moyeu (5) et un second moyeu (9), le premier moyeu (5) et le second moyeu (9) de l'arbre étant accouplés mécaniquement entre eux et les deux moyeux (5,9) étant supportés radialement l'un contre l'autre, caractérisé par le fait que le premier moyeu (5) et le second moyeu (9) de l'arbre sont accouplés mécaniquement entre eux par l'intermédiaire de barrettes de mesure (8) comportant des jauges extensométriques (14).

2. Arbre de mesure du couple suivant la revendication 1, caractérisé par le fait que le moyeu d'arbre (5) est constitué par une pièce en forme de disque (7) comportant un embout tubulaire saillant (6) qui s'étend dans la direction axiale de l'arbre de mesure, et que le second moyeu d'arbre (9) est supporté radialement par l'embout saillant (6) du premier moyeu d'arbre (5).

3. Arbre de mesure d'un couple suivant les revendications 1 et 2, caractérisé par le fait que les barrettes de mesure (8) sont réparties uniformément sur le pourtour extérieur de la pièce en forme de disque (7) du premier moyeu d'arbre (5).

FIG 1

FIG 2